# EUROPEAN PATENT APPLICATION

(11) **EP 4 404 621 A1**
(43) Date of publication of application: **24.07.2024**
(21) Application number: 22869139.0
(22) Date of filing: 09.09.2022
(51) Int. Cl.: H04W 36/00

(54) **MEASUREMENT METHOD AND APPARATUS, MEASUREMENT CONFIGURATION METHOD AND APPARATUS, TERMINAL, AND NETWORK SIDE DEVICE**

(30) Priority: 16.09.2021 CN 202111087579
(71) Applicant: Vivo Mobile Communication Co., Ltd., Dongguan, Guangdong 523863 (CN)
(72) Inventor: WANG, Yangyang, Dongguan, Guangdong 523863 (CN); YANG, Xiaodong, Dongguan, Guangdong 523863 (CN); BAO, Wei, Dongguan, Guangdong 523863 (CN); LIU, Xuanbing, Dongguan, Guangdong 523863 (CN)
(74) Representative: Lavoix
(86) International application number: PCT/CN2022/118126
(87) International publication number: WO 2023/040770

(57) **Abstract**

This application discloses a measurement method and apparatus, a measurement configuration method and apparatus, a terminal, and a network-side device, and pertains to the field of communication technologies. The measurement method in embodiments of the application includes: receiving, by a terminal, control information sent by a network-side device; and performing, by the terminal, early measurement according to the control information and measurement configuration information to obtain an early measurement result; where the control information is used to indicate at least one of the following: a first cell provides a first service through evolved packet system EPS fallback and/or radio access technology RAT fallback, where the first service includes a voice service; the first cell requires early measurement information related to load control; the first cell supports the terminal to perform early measurement in the first cell; and the first cell supports the terminal to report availability of an early measurement result after entering a connected state in the first cell.

## Description

### CROSS-REFERENCE TO RELATED APPLICATIONS

This application claims priority to Chinese Patent Application No. 202111087579.6, filed in China on September 16, 2021, which is incorporated herein by reference in its entirety.

### TECHNICAL FIELD

This application pertains to the communication field, and in particular, relates to a measurement method and apparatus, a measurement configuration method and apparatus, a terminal, and a network-side device.

### BACKGROUND

When an NR Node B (NR Node B, gNB) receives a QoS flow (QoS flow) setup for IP multimedia subsystem (IP Multimedia Subsystem, IMS) voice (voice), evolved packet system (Evolved Packet System, EPS) fallback (fallback, also referred to as fall back) or radio access technology (Radio Access Technology, RAT) fallback is triggered, so that the gNB sends measurement information for an evolved universal mobile telecommunications system (Universal Mobile Telecommunications System, UMTS) terrestrial radio access network (Evolved UMTS Terrestrial Radio Access Network, E-UTRAN) to a network, measurement by user equipment (User Equipment, UE), also referred to a terminal, may lead to a specific call setup delay, and call experience is relatively poor due to an excessively long EPS fallback or RAT fallback delay.

In addition, when the UE performs measurement for load distribution in a connected state, the UE keeps operating in a congested frequency band because a measurement result cannot be obtained in a timely manner, thus causing poor user experience.

### SUMMARY

Embodiments of this application provide a measurement method and apparatus, a measurement configuration method and apparatus, a terminal, and a network-side device, so as to resolve the problem of relatively poor user experience resulting from a relatively large delay in a measurement mode for load distribution and a measurement mode for EPS fallback or RAT fallback in the related art.

According to a first aspect, a measurement method is provided, including:
receiving, by a terminal, control information sent by a network-side device; and
performing, by the terminal, early measurement according to the control information and measurement configuration information to obtain an early measurement result; where
the control information is used to indicate at least one of the following:
   a first cell provides a first service through evolved packet system EPS fallback and/or radio access technology RAT fallback, where the first service includes a voice service;
   the first cell requires early measurement information related to load control;
   the first cell supports the terminal to perform early measurement in the first cell; and
   the first cell supports the terminal to report availability of an early measurement result after entering a connected state in the first cell.

According to a second aspect, a measurement apparatus is provided, including:
a first receiving module, configured to receive control information sent by a network-side device; and
a measurement module, configured to perform early measurement according to the control information and measurement configuration information to obtain an early measurement result; where
the control information is used to indicate at least one of the following:
   a first cell provides a first service through evolved packet system EPS fallback and/or radio access technology RAT fallback, where the first service includes a voice service;
   the first cell requires early measurement information related to load control;
   the first cell supports the terminal to perform early measurement in the first cell; and
   the first cell supports the terminal to report availability of an early measurement result after entering a connected state in the first cell.

According to a third aspect, a measurement configuration method is provided, including:
sending, by a network-side device, control information to a terminal; where
the control information includes at least one of the following:
   a first cell provides a first service through evolved packet system EPS fallback and/or radio access technology RAT fallback, where the first service includes a voice service;
   the first cell requires early measurement information related to load control;
   the first cell supports the terminal to perform early measurement in the first cell; and
   the first cell supports the terminal to report availability of an early measurement result after entering a connected state in the first cell.

According to a fourth aspect, a measurement configuration apparatus is provided, including:
a third transmission module, configured to send control information to a terminal; where
the control information includes at least one of the following:
   a first cell provides a first service through evolved packet system EPS fallback and/or radio access technology RAT fallback, where the first service includes a voice service;
   the first cell requires early measurement information related to load control;
   the first cell supports the terminal to perform early measurement in the first cell; and
   the first cell supports the terminal to report availability of an early measurement result after entering a connected state in the first cell.

According to a fifth aspect, a terminal is provided, where the terminal includes a processor, a memory, and a program or instructions stored in the memory and capable of running on the processor, and when the program or the instructions are executed by the processor, the steps of the method according to the first aspect are implemented.

According to a sixth aspect, a terminal is provided, including a processor and a communication interface. The communication interface is configured to receive control information sent by a network-side device; and the processor is configured to perform early measurement according to the control information and measurement configuration information to obtain an early measurement result; where
the control information is used to indicate at least one of the following:
a first cell provides a first service through evolved packet system EPS fallback and/or radio access technology RAT fallback, where the first service includes a voice service;
the first cell requires early measurement information related to load control;
the first cell supports the terminal to perform early measurement in the first cell; and
the first cell supports the terminal to report availability of an early measurement result after entering a connected state in the first cell.

According to a seventh aspect, a network-side device is provided, where the network-side device includes a processor, a memory, and a program or instructions stored in the memory and capable of running on the processor, and when the program or the instructions are executed by the processor, the steps of the method according to the third aspect are implemented.

According to an eighth aspect, a network-side device is provided, including a processor and a communication interface, where the communication interface is configured to: send control information to a terminal; and
the control information includes at least one of the following:
a first cell provides a first service through evolved packet system EPS fallback and/or radio access technology RAT fallback, where the first service includes a voice service;
the first cell requires early measurement information related to load control;
the first cell supports the terminal to perform early measurement in the first cell; and
the first cell supports the terminal to report availability of an early measurement result after entering a connected state in the first cell.

According to a ninth aspect, a readable storage medium is provided, where a program or instructions are stored in the readable storage medium, and when the program or the instructions are executed by a processor, the steps of the method according to the first aspect are implemented, or the steps of the method according to the third aspect are implemented.

According to a tenth aspect, a chip is provided, where the chip includes a processor and a communication interface, the communication interface is coupled to the processor, and the processor is configured to run a program or instructions to implement the steps of the method according to the first aspect or the third aspect.

According to an eleventh aspect, a computer program product/program product is provided, where the computer program/program product is stored in a non-transitory storage medium, and the program/program product is executed by at least one processor to implement the steps of the method according to the first aspect or the third aspect.

According to a twelfth aspect, a communication device is provided and configured to perform the steps of the method according to the first aspect or the third aspect.

In the embodiments of the application, early measurement is performed according to the control information of the network-side device to obtain the early measurement result, so as to resolve the problem of a large delay caused in the measurement mode in the related art. The early measurement mode provided in the application can reduce a communication delay and improve user experience.

### BRIEF DESCRIPTION OF DRAWINGS

FIG. 1 is a block diagram of a wireless communication system to which the embodiments of this application are applicable;
FIG. 2 is a schematic flowchart of a measurement method according to an embodiment of this application;
FIG. 3 is a schematic modular diagram of a measurement apparatus according to an embodiment of this application;
FIG. 4 is a structural block diagram of a terminal according to an embodiment of this application;
FIG. 5 is a schematic flowchart of a measurement configuration method according to an embodiment of this application;
FIG. 6 is a schematic modular diagram of a measurement configuration apparatus according to an embodiment of this application;
FIG. 7 is a structural block diagram of a network-side device according to an embodiment of this application; and
FIG. 8 is a structural block diagram of a communication device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that technologies described in the embodiments of this application are not limited to a long term evolution (Long Term Evolution, LTE)/LTE-advanced (LTE-Advanced, LTE-A) system, and may also be used in various wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communications system.

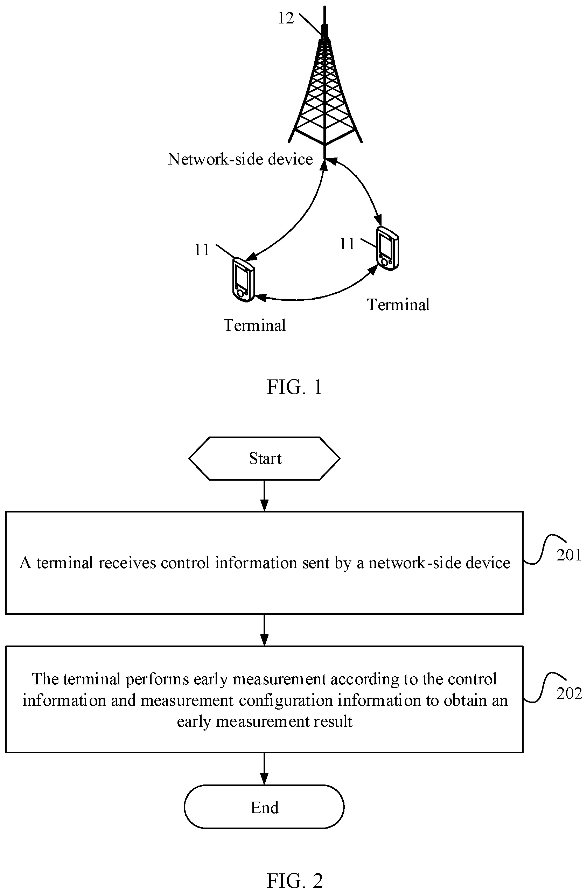

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (Augmented Reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), and a smart home device (a home device with wireless communication function, such as refrigerator, TV, washing machine, or furniture). The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, game console, and the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a wireless local area network (Wireless Local Area Network, WLAN) access point, a wireless fidelity (Wireless Fidelity, WiFi) node, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The following first describes related technologies of this application.

### I. EPS fallback mechanism

An important manner of implementing voice in the 5th generation (5^{th} Generation, 5G) network is EPS fallback, which means switching/redirecting to 4th generation (4^{th} Generation, 4G) during calling to complete the call through 4G voice over long term evolution (Voice over Long Term Evolution, VoLTE); and returning to 5G through fast return after the call is completed.

### EPS fallback based on handover

When a terminal with an EPS fallback capability initiates a voice service request, NR delivers a B1 measurement of LTE, the terminal performs reporting after a B1 threshold is met, the new radio (New Radio, NR) side initiates a command for handover to the LTE network, and the terminal performs voice service after handing over to the LTE network.

Main steps are as follows.

Step S11: A gNB delivers a B1 measurement to UE, where the measurement carries a 4G carrier frequency (frequency point) to be measured and a B1 threshold.

Step S12: User equipment (User Equipment, UE), also referred to terminal, reports a measured B1 level, physical cell identifier (Physical Cell Identifier, PCI), and measurement identifier (measid) of an LTE cell to the gNB.

Step S13: The gNB delivers a handover command to UE, carrying a target cell frequency point and a PCI.

Step S14: Establish a dedicated bearer for a voice service with quality of service class identifier (Quality of Service Class Identifier, QCI) of 1.

Step S15: After 4G voice is completed, return to a 5G cell through FastReturn (blind redirection).

### EPS fallback based on measurement redirection

A procedure of EPS fallback based on measurement redirection is basically similar to that of EPS fallback based on handover, with a difference only in a fallback manner. EPS fallback based on redirection is to implement fallback to the LTE network by using a target frequency point carried in RRC release (RRCRelease) after B 1 measurement in NR.

Main steps are as follows.

Step S21: The gNB sends a B1 measurement to the UE.

Step S22: The UE reports a B1 measurement, where the measurement report includes a PCI of a target cell, a measured cell level, and a measured measid.

Step S23: After a B1 threshold is met, the gNB performs redirection to the LTE network via a radio resource control (Radio Resource Control, RRC) release (Release) message, where the message needs to contain a frequency point of the target cell.

### EPS fallback based on blind redirection

A biggest difference between EPS fallback based on blind redirection and EPS fallback based on handover as well as EPS fallback based on measurement redirection lies in that direct redirection to the LTE network is implemented upon execution of a voice service, without requiring any measurement.

### II. Event B1 (Inter RAT neighbour becomes betterthan threshold)

Event B1 may be used for an inter-RAT handover procedure that does not depend on a coverage of a serving cell. For example, in the load balancing feature, the UE is determined to move away from NR due to a load condition rather than a radio condition. In this case, the UE merely needs to verify that a target cell in other RATs (such as LTE) is superior to a specific signal level threshold and can provide sufficient coverage.
Trigger condition: Mn+ofn+ocn-hys > thresh; and
cancellation condition: Mn+ Ofn+Ocn+Hys < Thresh.

### III. Load distribution

Load distribution is a measurement for preventing decline of user experience caused by congestion in a specific frequency band, and through cell quality measurement, the network may select a cell with a better measurement result as a distribution direction, thus improving a throughput of the UE.

When the UE performs measurement for load distribution in a connected state, because a measurement result is not obtained in a timely manner, the UE keeps operating in a congested frequency band, leading to poor user experience. Therefore, it is necessary to propose related schemes to obtain a measurement result of load distribution for the UE as soon as possible.

### IV Idle/inactive (Idle/inactive) measurement

Idle/inactive measurement is introduced into R16, and its purpose is to establish dual connectivity (Dual connectivity, DC)/carrier aggregation (Carrier Aggregation, CA). The network supporting DC/CA sends indication information to the UE, and carries related measurement configuration information in RRC release and/or system information block (System Information Block, SIB)11. The UE supporting DC/CA may perform idle/inactive-state measurement after receiving the indication information and measurement configuration information.

With reference to the accompanying drawings, the following describes in detail, by using some embodiments and application scenarios thereof, a measurement method and apparatus, a measurement configuration method and apparatus, a terminal, and a network-side device provided in the embodiments of this application.

As shown in FIG. 2, an embodiment of this application provides a measurement method, including the following steps.

Step 201: A terminal receives control information sent by a network-side device.

Step 202: The terminal performs early measurement according to the control information and measurement configuration information to obtain an early measurement result.

It should be noted that the control information is used to indicate at least one of the following:
A11. a first cell supports providing a first service through evolved packet system (Evolved Packet System, EPS) fallback and/or radio access technology (Radio Access Technology, RAT) fallback, where the first service includes a voice service;
A12. the first cell requires early measurement information related to load control;
A13. the first cell supports the terminal to perform early measurement in the first cell; and
A14. the first cell supports the terminal to report availability of an early measurement result after entering a connected state in the first cell.

It should be noted that the first cell is any one or more cells under the network-side device, that is, if some cells under the network-side device have at least one requirement of A11 to A14, the network-side device needs to inform the terminal of such case.

It should be noted that an optional implementation of step 201 is:
the terminal receives a first message sent by the network-side device, where the first message includes the control information; and
the first message includes at least one of the following:
a broadcast message; and
a radio resource control RRC release (RRCRelease) message.

It should be noted that the network-side device may add a new field to the first message, for carrying the control information, or the network-side device may use a field of a first message in the related art and give it a new meaning to implement indication of the control information.

It should be noted that measurement mentioned in this application is to perform measurement in a cell corresponding to a frequency point to obtain a measurement result of the cell.

Optionally, the early measurement described in this embodiment of the application includes at least one of the following:
measurement performed in an idle (idle) state, measurement performed in inactive (inactive) state, measurement performed when entering a connected (connected) state from the idle state, measurement performed when entering the connected state from the inactive state, measurement performed when the network-side device requests for a measurement result, and measurement performed when receiving control information sent by the network-side device.

It should be noted that, in an optional case, the terminal needs to perform measurement upon receiving the control information; in another optional case, the terminal receives the measurement information, and then performs measurement when a measurement condition is met. For example, the early measurement includes measurement performed in the idle state, and the terminal obtains the control information from an RRC release message, so that the terminal performs measurement after releasing an RRC connection and entering the idle state.

It should be noted that the terminal in this embodiment of this application needs to have a first capability for implementation of early measurement.

The first capability includes at least one of the following:
supporting EPS fallback, supporting to obtain a voice service through an evolved universal mobile telecommunications system terrestrial radio access network (Evolved Universal Terrestrial Radio Access Network, E-UTRAN), supporting to obtain a voice service through a 5G core network (SG Core Network, 5GC), supporting load control, supporting early measurement, and supporting to report an early measurement result.

Only a terminal with a corresponding capability can perform early measurement when receiving the control information sent by the network-side device. For example, if the network-side device indicates that the first cell supports voice service through EPS fallback and/or RAT fallback, the terminal that has the capability of supporting EPS fallback and accesses the network-side device can perform early measurement in the first cell. If a terminal accessing the network-side device does not have the capability of supporting EPS fallback, the terminal cannot perform early measurement in the first cell.

It should be noted that the measurement configuration information mentioned in this embodiment of this application is configured by the network-side device for the terminal, and optionally, the measurement configuration information may include frequency point information, where the frequency point information includes a frequency point identifier and a maximum measurement bandwidth corresponding to each frequency point identifier.

Optionally, the measurement configuration information may further include at least one of the following:
B 11. part of configuration information in system information block 4 (SIB4);
B 12. all configuration information in SIB4;
B 13. part of configuration information in system information block 3 (SIB3);
B 14. all configuration information in SIB3;
B 15. part of configuration information in system information block 5 (SIBS);
B 16. all configuration information in SIBS;
B17. part of configuration information in system information block 11 (SIB11);
B 18. all configuration information in SIB 11; and
B19. configuration information in an RRC release message.

It should be noted that B11 to B19 refer to where the measurement configuration information can be obtained. Specifically, the part of configuration information includes: configuration information corresponding to a frequency point included in the first list.

The first list is used to indicate a valid area range for configuration information, and the first list includes at least one frequency point and at least one cell corresponding to each frequency point.

Optionally, the terminal obtains the first list in the following manner:
the terminal receives measurement configuration related information sent by the network-side device, where the measurement configuration related information includes the first list.

Optionally, the measurement configuration related information is usually included in a fifth message, and the fifth message includes at least one of the following:
a broadcast message and an RRC release message.

It should be further noted that after obtaining the measurement configuration information, the terminal needs to store the measurement configuration information for use during measurement. However, with movement of the terminal, measurement configuration information previously stored by the terminal may not be applicable to a current region. Therefore, the terminal needs to update the stored measurement configuration information in this embodiment of the application.

Optionally, when the first condition is met, the UE updates the stored measurement configuration information; and the first condition includes at least one of the following:
B21. When entering RRC_IDLE or RRC_INACTIVE from RRC_{_}CONNCETED or RRC_INACTIVE, the UE performs cell selection;
B22. The first system information (such as SIB4, SIB5, or SIB 11) has been updated.

The first system information includes configuration information related to a first measurement, where the first measurement includes measurement for at least one of EPS fallback, RAT fallback, and load control, and determining of the first system information may be implemented based on UE implementation, protocol prescription, predefinition, and so on.

### B23. A first timer expires.

It should be noted that the first timer meets at least one of the following: being configured via a broadcast message, being configured via an RRC_Release message, being specified by the protocol, being predefined, and being implemented by the UE.

B24. The UE moves out of a first range, where the first range meets at least one of the following: being specified by the protocol, being configured via a broadcast message, being configured via an RRC_Release message, being predefined, and being implemented by the UE.

The measurement configuration information of the UE is valid within the first range, that is, the measurement configuration information is not updated when the UE moves within the first range.

It should be noted that if the UE meets a preset condition and the UE receives the first system information in a current camp-on cell; and if the first system information includes the first measurement configuration information, the UE stores or replaces the first measurement configuration information; or if the UE stores the first measurement configuration information, the UE deletes the first measurement configuration information.

It should be further noted that to facilitate use of a measurement result by the terminal, optionally, the terminal needs to store the measurement result. Generally, the terminal does not store all measurement results, and only a measurement result meeting a specific condition can be stored by the terminal. Optionally, a specific implementation of this embodiment of the application is:
the terminal stores an early measurement result for a second cell; where
the early measurement result corresponding to the second cell is greater than or equal to a first threshold.

That is, the terminal stores only an early measurement result of a cell that is greater than or equal to the first threshold. Optionally, the first threshold includes at least one of the following:
C11. a reporting threshold for a measurement result of a frequency point corresponding to EPS fallback;
C12. a reporting threshold for a measurement result of a frequency point corresponding to RAT fallback;
C13. a reporting threshold for a measurement result of a frequency point corresponding to load control; and
C14. a reporting threshold corresponding to the early measurement result.

It should be noted that the terminal needs to store the early measurement result as described above; optionally, if the terminal stores too many measurement results, it will occupy a lot of storage space of the terminal; and optionally, the terminal also needs to delete the stored measurement results.

Optionally, when a second condition is met and the UE has a stored measurement result, the UE deletes the stored measurement result, where the second condition includes at least one of the following:
C21. The UE has reported the measurement result.
C22. A second timer expires.

It should be noted that the second timer meets at least one of the following: being configured via a broadcast message, being configured via an RRC_Release message, being specified by the protocol, being predefined, and being implemented by the UE.

C23. The UE moves out of the first range.

It should be noted that the first range meets at least one of the following: being configured via a broadcast message, being configured via an RRC_Release message, being specified by the protocol, being predefined, and being implemented by the UE.

This case means that the measurement configuration information of the UE is valid within the first range, that is, the measurement configuration information is not updated when the UE moves within the first range, but needs to be updated when the terminal moves out of the first range, and corresponding previously-stored measurement results are no longer applicable and need to be deleted.

C24. The measurement configuration information of the UE has changed.

It should be noted that the measurement result is usually reported based on a request of the network-side device. In order to avoid a situation where the network does not know a status of the terminal side and incorrectly sends measurement result request information, resulting in a waste of resources, the terminal needs to send the first indication to the network-side device after obtaining and storing an early measurement result. The first indication is used to indicate that the terminal has a measurement result.

Specifically, the measurement result includes at least one of the following:
D11. a measurement result related to EPS fallback;
D12. a measurement result related to RAT fallback;
D13. a measurement result related to load control; and
D14. an available early measurement result.

Optionally, a specific implementation of sending the first indication to the network-side device by the terminal is:
the terminal sends a second message to the network-side device, where the second message includes the first indication; and
the second message includes at least one of the following:
   an RRC establishment request message, an RRC establishment completion message, an RRC resume request message, and an RRC resume completion message.

It should be noted that the terminal may add a new field (for example, adding a 1-bit information field) to the second message, for carrying the first indication, or the terminal may use a field of a second message in the related art and give it a new meaning to implement indication of the first indication.

It should be noted that the RRC establishment request message, RRC establishment completion message, RRC resume request message, and RRC resume completion message are messages transmitted during the connection establishment procedure, that is, the terminal may inform the network-side device of a stored measurement result during the connection establishment procedure.

Optionally, when requiring a measurement result, the network-side device may send the measurement result request information to the terminal. After receiving the measurement result request information sent by the network-side device, the terminal sends a measurement report to the network-side device based on the measurement result request information, and the measurement report includes the early measurement result stored by the terminal.

It should be noted herein that the measurement result request information needs to clearly indicate to the terminal what type of measurement result being requested for, so as to facilitate the terminal to send the measurement result. Optionally, the measurement result request information is used to request for at least one of the following:
E11. a measurement result related to EPS fallback;
E12. a measurement result related to RAT fallback;
E13. a measurement result related to load control;
E14. a measurement result in an idle state; and
E15. a measurement result in an inactive state.

Optionally, the measurement result request information is usually included in a third message sent by the network-side device. Specifically, the third message includes at least one of the following:
an RRC resume (RRC Resume) message, a UE information request (UEInformationRequest) message, and an RRC reconfiguration (RRCReconfiguration) message.

It should be noted that the network-side device may add a new field to the third message, for carrying the measurement result request information, or the network-side device may use a field of a third message in the related art and give it a new meaning to implement indication of the measurement result request information.

Optionally, the measurement report is usually included in a fourth message sent by the terminal. Specifically, the fourth message includes at least one of the following:
an RRC resume completion message, an RRC reconfiguration completion message, an uplink information transmission message, a terminal information response message, and uplink dedicated control channel information.

The following specifically describes the specific implementation of this application by using an example in which the terminal (UE) completes early measurement (early measurement) in an idle state/inactive state to reduce an EPS fallback and/or RAT fallback delay.

Step S101: A base station sends control information to the UE.

The control information is used to indicate that the UE camping on a specific cell with specific capabilities can perform early measurement in an idle state/inactive state for EPS fallback and/or RAT fallback; and/or
when establishing or restoring a connection in the cell, the UE reports whether the measurement result is available.

It should be noted that a specific cell has the capability of supporting handover or redirection to E-UTRAN/5GC to provide a voice service. The E-UTRAN/5GC means that a radio access network for one network is E-UTRAN and a core network is 5GC, that is, the E-UTRAN is connected to the 5GC; and/or
has the capability of supporting handover to EPS or redirection to EPS.

Step S102: The UE receives the control information.

The control information is configured by the network via a broadcast message and/or an RRCRelease message.

Step S103: The UE performs idle/inactive measurement according to the control information.

It should be noted that, optionally, the UE should have the capability of supporting EPS fallback, and optionally, the UE should have the capability of supporting to obtain IMS voice through E-UTRAN/5GC and supporting to report an idle/inactive measurement result.

It should be noted that the terminal should perform idle/inactive measurement according to the measurement configuration information sent by the network-side device.

Step S104: The UE determines cell information required for a frequency point.

It should be noted that the frequency point is frequency point information determined based on the measurement configuration information, and the cell information is used for storing and reporting the measurement result.

Optionally, that the UE determines cell information required for a frequency point includes but is not limited to at least one of the following:
the UE selects cell information contained in at least one of SIB5 (eutra-FreqNeighCellList), SIB11 (measCellListEUTRA), and RRCRelease (measCellListEUTRA) for reporting a measurement result;
the UE selects N cells with strongest measurement results from cell information in at least one of SIB5, SIB11, and RRCRelease for reporting a measurement result; and
the UE selects N cells with strongest measurement results to report a measurement result.

It should be noted here that N is the maximum number of cells allowed for reporting, and may be carried by a broadcast message or an RRCRelease message, or may be specified by the protocol.

Step S105: The UE determines a storage/reporting format (measurement quantities).

Optionally, the method for determining the storage/reporting format includes but is not limited to at least one of the following:
if the UE receives a broadcast message including a low-priority cell-serving cell threshold value Q (threshServingLowQ), the UE uses reference signal received quality (Reference Signal Received Quality, RSRQ) as the storage/reporting format; otherwise, the UE uses reference signal received power (Reference Signal Received Power, RSRP) as the storage/reporting format;
if the UE receives a SIB 11 message including a reporting quantity that is set to RSRQ, the UE uses RSRQ as the storage format; otherwise, the UE uses RSRP as the storage format; and
if the UE receives a RRCRelease message including a reporting quantity that is set to RSRQ, the UE uses RSRQ as the storage format; otherwise, the UE uses RSRP as the storage format.

Step S106: The UE obtains and stores a measurement result.

The measurement results include measurement results of one or more frequency points, and the measurement result of the frequency point includes measurement results of one or more cells, that is, the measurement result finally corresponds to a measurement result of at least one cell, and the terminal obtains and stores the measurement result by performing the steps 103 to 105.

Step S107: The UE executes an RRC connection establishment/RRC connection recovery procedure.

Step S108: Optionally, the UE indicates to the base station that the UE has an available measurement result for an E-UTRAN frequency point related to EPS fallback and/or RAT fallback.

The terminal may indicate the measurement result of the E-UTRAN frequency point related to EPS fallback and/or RAT fallback in the RRC establishment request message, RRC establishment completion message, RRC connection recovery request message, or RRC connection recovery completion message.

Step S109: The base station sends measurement result request information to the UE.

It should be noted that the measurement result request information includes requesting a measurement result for EPS fallback, a measurement result for RAT fallback, or an idle/inactive measurement result.

Step S110: The UE sends a measurement report to the network.

It should be noted that the measurement report includes the measurement result stored in step S106.

Step S111: The base station selects, based on the measurement report of the UE, an appropriate E-UTRAN frequency point for handover or redirection, and sends related configuration information to the UE.

It should be noted that the embodiments of this application propose an early measurement manner, in which the base station indicates the UE via a broadcast message or RRCRelease to perform measurement for EPS fallback and/or RAT fallback and/or load distribution in the idle/inactive state, so as to ensure that the UE already has an available measurement result before entering the connected state, thereby reducing an EPS fallback and/or RAT fallback and/or load distribution delay as much as possible.

It should be noted that, for the measurement method provided by the embodiments of this application, the execution body may be a measurement apparatus, or a control module for executing the measurement method in the measurement apparatus. In the embodiments of this application, the measurement method being performed by the measurement apparatus is used as an example to describe the measurement apparatus provided in the embodiments of this application.

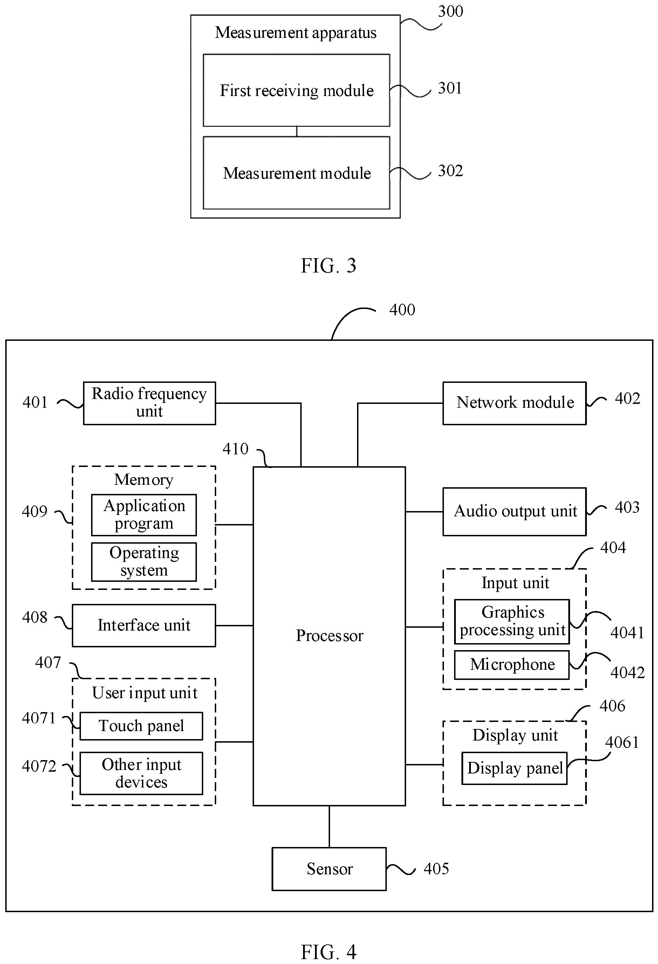

As shown in FIG. 3, an embodiment of this application provides a measurement apparatus 300, applied to a terminal and including:
a first receiving module 301, configured to receive control information sent by a network-side device; and
a measurement module 302, configured to perform early measurement according to the control information and measurement configuration information to obtain an early measurement result; where
the control information is used to indicate at least one of the following:
   a first cell provides a first service through evolved packet system EPS fallback and/or radio access technology RAT fallback, where the first service includes a voice service;
   the first cell requires early measurement information related to load control;
   the first cell supports the terminal to perform early measurement in the first cell; and
   the first cell supports the terminal to report availability of an early measurement result after entering a connected state in the first cell.

Optionally, the early measurement includes at least one of the following:
measurement performed in an idle state, measurement performed in inactive state, measurement performed when entering a connected state from the idle state, measurement performed when entering the connected state from the inactive state, measurement performed when the network-side device requests for a measurement result, and measurement performed when receiving control information sent by the network-side device.

Optionally, the first receiving module 301 is configured to:
receive a first message sent by the network-side device, where the first message includes the control information; and
the first message includes at least one of the following:
   a broadcast message; and
   a radio resource control RRC release message.

Optionally, after the measurement module 302 performs early measurement according to the control information and measurement configuration information to obtain an early measurement result, the apparatus further includes:
a first transmission module, configured to send a first indication to the network-side device, where
the first indication is used for indicating that the terminal has a measurement result.

Optionally, the measurement result includes at least one of the following:
a measurement result related to EPS fallback;
a measurement result related to RAT fallback;
a measurement result related to load control;
an available early measurement result.

Optionally, the first transmission module is configured to:
send a second message to the network-side device, where the second message includes the first indication; and
the second message includes at least one of the following:
   an RRC establishment request message, an RRC establishment completion message, an RRC resume request message, and an RRC resume completion message.

Optionally, the apparatus further includes:
a second receiving module, configured to receive measurement result request information sent by the network-side device; where
the measurement result request information is used to request for at least one of the following:
   a measurement result related to EPS fallback;
   a measurement result related to RAT fallback;
   a measurement result related to load control;
   a measurement result in an idle state; and
   a measurement result in an inactive state.

Optionally, the second receiving module is configured to:
receive a third message sent by the network-side device, where the third message includes the measurement result request information; and
the third message includes at least one of the following:
   an RRC resume message, a terminal information request message, and an RRC reconfiguration message.

Optionally, after the second receiving module receives the measurement result request information sent by the network-side device, the apparatus further includes:
a second transmission module, configured to send a measurement report to the network-side device based on the measurement result request information, where the measurement report includes the early measurement result.

Optionally, the second transmission module is configured to:
send a fourth message to the network-side device, where the fourth message includes the measurement report; and
the fourth message includes at least one of the following:
   an RRC resume completion message, an RRC reconfiguration completion message, an uplink information transmission message, a terminal information response message, and uplink dedicated control channel information.

Optionally, after the measurement module 302 performs early measurement according to the control information and measurement configuration information to obtain an early measurement result, the apparatus further includes:
a storage module, configured to store an early measurement result for a second cell; where
the early measurement result corresponding to the second cell is greater than or equal to a first threshold.

Optionally, the first threshold includes at least one of the following:
a reporting threshold for a measurement result of a frequency point corresponding to EPS fallback;
a reporting threshold for a measurement result of a frequency point corresponding to RAT fallback;
a reporting threshold for a measurement result of a frequency point corresponding to load control; and
a reporting threshold corresponding to the early measurement result.

Optionally, the terminal has a first capability.

The first capability includes at least one of the following:
supporting EPS fallback, supporting to obtain a voice service through an evolved universal mobile telecommunications system terrestrial radio access network E-UTRAN, supporting to obtain a voice service through a 5G core network, supporting load control, and supporting to report an early measurement result.

Optionally, the measurement configuration information includes at least one of the following:
part of configuration information in system information block 4;
all configuration information in system information block 4;
part of configuration information in system information block 3;
all configuration information in system information block 3;
part of configuration information in system information block 5;
all configuration information in system information block 5;
part of configuration information in system information block 11;
all configuration information in system information block 11; and
configuration information in an RRC release message.

Optionally, the part of configuration information includes: configuration information corresponding to a frequency point included in a first list; and
the first list is used to indicate a valid area range for configuration information, and the first list includes at least one frequency point and at least one cell corresponding to each frequency point.

Optionally, the apparatus further includes:
a fifth receiving module, configured to receive measurement configuration related information sent by the network-side device, where the measurement configuration related information includes the first list.

Optionally, the fifth receiving module is configured to:
receive a fifth message sent by the network-side device, where the fifth message includes the measurement configuration related information; and
the fifth message includes at least one of the following:
   a broadcast message and an RRC release message.

Optionally, the measurement configuration information includes frequency point information, and the frequency point information includes a frequency point identifier and a maximum measurement bandwidth corresponding to each frequency point identifier.

It should be noted that the apparatus embodiment is an apparatus in one-to-one correspondence to the above method embodiment, and the implementations of the above method embodiment can be all applied to the apparatus embodiment, with the same technical effects achieved. Details are not repeated herein.

The measurement apparatus in this embodiment of this application may be an apparatus, or an apparatus or electric device having an operating system, or may be a component, an integrated circuit, or a chip in the terminal. The apparatus or electric device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The measurement apparatus provided in this embodiment of this application is capable of implementing the processes implemented in the method embodiments in FIG. 2, with the same technical effects achieved. To avoid repetition, details are not described herein again.

An embodiment of this application further provides a terminal, including a processor and a communication interface, where the communication interface is configured to receive control information sent by a network-side device; and the processor is configured to perform early measurement according to the control information and measurement configuration information to obtain an early measurement result.

The control information is used to indicate at least one of the following:
a first cell provides a first service through evolved packet system EPS fallback and/or radio access technology RAT fallback, where the first service includes a voice service;
the first cell requires early measurement information related to load control;
the first cell supports the terminal to perform early measurement in the first cell; and
the first cell supports the terminal to report availability of an early measurement result after entering a connected state in the first cell.

The terminal embodiments correspond to the foregoing terminal-side method embodiments, and the implementation processes and implementations of the foregoing method embodiments can be applied to the terminal embodiments, with the same technical effects achieved. Specifically, FIG. 4 is a schematic diagram of a hardware structure of a terminal for implementing the embodiments of this application.

The terminal 400 includes but is not limited to at least part of components such as a radio frequency unit 401, a network module 402, an audio output unit 403, an input unit 404, a sensor 405, a display unit 406, a user input unit 407, an interface unit 408, a memory 409, and a processor 410.

Persons skilled in the art can understand that the terminal 400 may further include a power supply (for example, a battery) supplying power to the components, and the power supply may be logically connected to the processor 410 through a power management system. In this way, functions such as charge management, discharge management, and power consumption management are implemented by using the power management system. The structure of the terminal shown in FIG. 4 does not constitute any limitation on the terminal. The terminal may include more or fewer components than those shown in the figure, or a combination of some components, or the components disposed differently. Details are not described herein again.

It can be understood that in this embodiment of this application, the input unit 404 may include a graphics processing unit (Graphics Processing Unit, GPU) 4041 and a microphone 4042. The graphics processing unit 4041 processes image data of a still picture or video obtained by an image capture apparatus (such as a camera) in a video capture mode or an image capture mode. The display unit 406 may include a display panel 4061, and the display panel 4061 may be configured in a form of a liquid crystal display, an organic light-emitting diode, and the like. The user input unit 407 may include a touch panel 4071 and other input devices 4072. The touch panel 4071 is also referred to as a touchscreen. The touch panel 4071 may include two parts: a touch detection apparatus and a touch controller. The other input devices 4072 may include but are not limited to a physical keyboard, a function key (such as a volume control key or a power on/off key), a trackball, a mouse, a joystick, and the like. Details are not described herein.

In this embodiment of this application, the radio frequency unit 401 receives downlink data from a network-side device, and then sends the downlink data to the processor 410 for processing; and also sends uplink data to the network-side device. Generally, the radio frequency unit 401 includes but is not limited to an antenna, at least one amplifier, a transceiver, a coupler, a low noise amplifier, a duplexer, and the like.

The memory 409 may be configured to store software programs or instructions and various data. The memory 409 may include a program or instruction storage area and a data storage area. The program or instruction storage area may store an operating system, an application program or instruction required by at least one function (for example, a sound playback function or an image playback function), and the like. In addition, the memory 409 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another volatile solid-state storage device.

The processor 410 may include one or more processing units. Optionally, an application processor and a modem processor may be integrated in the processor 410. The application processor primarily processes an operating system, user interfaces, application programs or instructions, and the like. The modem processor primarily processes radio communication, for example, being a baseband processor. It can be understood that the modem processor may alternatively be not integrated in the processor 410.

The radio frequency unit 401 is configured to implement the following:
receiving control information sent by a network-side device.

The processor 410 is configured to implement the following:
performing early measurement according to the control information and measurement configuration information to obtain an early measurement result.

The control information is used to indicate at least one of the following:
a first cell provides a first service through evolved packet system EPS fallback and/or radio access technology RAT fallback, where the first service includes a voice service;
the first cell requires early measurement information related to load control;
the first cell supports the terminal to perform early measurement in the first cell; and
the first cell supports the terminal to report availability of an early measurement result after entering a connected state in the first cell.

Optionally, the early measurement includes at least one of the following:
measurement performed in an idle state, measurement performed in inactive state, measurement performed when entering a connected state from the idle state, measurement performed when entering the connected state from the inactive state, measurement performed when the network-side device requests for a measurement result, and measurement performed when receiving control information sent by the network-side device.

Optionally, the radio frequency unit 401 is configured to implement the following:
receive a first message sent by the network-side device, where the first message includes the control information; and
the first message includes at least one of the following:
   a broadcast message; and
   a radio resource control RRC release message.

Optionally, the radio frequency unit 401 is further configured to implement the following:
sending a first indication to a network-side device; where
the first indication is used for indicating that the terminal has a measurement result.

Optionally, the measurement result includes at least one of the following:
a measurement result related to EPS fallback;
a measurement result related to RAT fallback;
a measurement result related to load control; and
an available early measurement result.

Optionally, the radio frequency unit 401 is configured to implement the following:
sending a second message to the network-side device, where the second message includes the first indication; and
the second message includes at least one of the following:
   an RRC establishment request message, an RRC establishment completion message, an RRC resume request message, and an RRC resume completion message.

Optionally, the radio frequency unit 401 is further configured to implement the following:
receiving measurement result request information sent by the network-side device; where
the measurement result request information is used to request for at least one of the following:
   a measurement result related to EPS fallback;
   a measurement result related to RAT fallback;
   a measurement result related to load control;
   a measurement result in an idle state; and
   a measurement result in an inactive state.

Optionally, the radio frequency unit 401 is configured to implement the following:
receive a third message sent by the network-side device, where the third message includes the measurement result request information; and
the third message includes at least one of the following:
   an RRC resume message, a terminal information request message, and an RRC reconfiguration message.

Optionally, the radio frequency unit 401 is further configured to implement the following:
sending a measurement report to the network-side device based on the measurement result request information, where the measurement report includes the early measurement result.

Optionally, the radio frequency unit 401 is configured to implement the following:
sending a fourth message to the network-side device, where the fourth message includes the measurement report; and
the fourth message includes at least one of the following:
   an RRC resume completion message, an RRC reconfiguration completion message, an uplink information transmission message, a terminal information response message, and uplink dedicated control channel information.

Optionally, the processor 410 is further configured to implement the following:
storing, for the terminal, an early measurement result for a second cell; where
the early measurement result corresponding to the second cell is greater than or equal to a first threshold.

Optionally, the first threshold includes at least one of the following:
a reporting threshold for a measurement result of a frequency point corresponding to EPS fallback;
a reporting threshold for a measurement result of a frequency point corresponding to RAT fallback;
a reporting threshold for a measurement result of a frequency point corresponding to load control; and
a reporting threshold corresponding to the early measurement result.

Optionally, the terminal has a first capability.

The first capability includes at least one of the following:
supporting EPS fallback, supporting to obtain a voice service through an evolved universal mobile telecommunications system terrestrial radio access network E-UTRAN, supporting to obtain a voice service through a 5G core network, supporting load control, and supporting to report an early measurement result.

Optionally, the measurement configuration information includes at least one of the following:
part of configuration information in system information block 4;
all configuration information in system information block 4;
part of configuration information in system information block 3;
all configuration information in system information block 3;
part of configuration information in system information block 5;
all configuration information in system information block 5;
part of configuration information in system information block 11;
all configuration information in system information block 11; and
configuration information in an RRC release message.

Optionally, the part of configuration information includes: configuration information corresponding to a frequency point included in a first list; and
the first list is used to indicate a valid area range for configuration information, and the first list includes at least one frequency point and at least one cell corresponding to each frequency point.

Optionally, the radio frequency unit 401 is further configured to implement the following:
receiving measurement configuration related information sent by the network-side device, where the measurement configuration related information includes the first list.

Optionally, the radio frequency unit 401 is configured to implement the following:
receiving a fifth message sent by the network-side device, where the fifth message includes the measurement configuration related information; and
the fifth message includes at least one of the following:
   a broadcast message and an RRC release message.

Optionally, the measurement configuration information includes frequency point information, and the frequency point information includes a frequency point identifier and a maximum measurement bandwidth corresponding to each frequency point identifier.

Preferentially, an embodiment of this application further provides a terminal, including a processor, a memory, and a program or instructions stored in the memory and capable of running on the processor. When the program or instructions are executed by the processor, the processes of the foregoing measurement method are implemented, with the same technical effects achieved. To avoid repetition, details are not described herein again.

An embodiment of this application further provides a readable storage medium. The readable storage medium may be non-volatile or volatile. A program or instructions are stored in the readable storage medium. When the program or the instructions are executed by a processor, the processes of the foregoing embodiments of the measurement method can be implemented, with the same technical effects achieved. To avoid repetition, details are not described herein again. The computer-readable storage medium is, for example, a read-only memory (Read-Only Memory, ROM), a random access memory (Random Access Memory, RAM), a magnetic disk, or an optical disc.

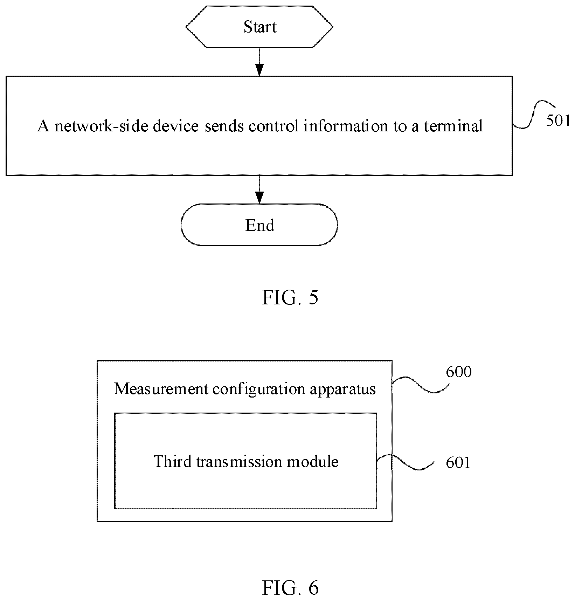

As shown in FIG. 5, an embodiment of this application further provides a measurement configuration method including:

Step 501: A network-side device sends control information to a terminal.

The control information includes at least one of the following:
a first cell provides a first service through evolved packet system EPS fallback and/or radio access technology RAT fallback, where the first service includes a voice service;
the first cell requires early measurement information related to load control;
the first cell supports the terminal to perform early measurement in the first cell; and
the first cell supports the terminal to report availability of an early measurement result after entering a connected state in the first cell.

Optionally, the sending, by a network-side device, control information to a terminal includes:
sending, by the network-side device, a first message to a terminal, where the first message includes the control information; and
the first message includes at least one of the following:
   a broadcast message; and
   a radio resource control RRC release message.

Optionally, after the sending, by a network-side device, control information to a terminal, the method further includes:
receiving, by the network-side device, a first indication sent by the terminal; where
the first indication is used for indicating that the terminal has a measurement result.

Optionally, the measurement result includes at least one of the following:
a measurement result related to EPS fallback;
a measurement result related to RAT fallback;
a measurement result related to load control; and
an available early measurement result.

Optionally, the receiving, by the network-side device, a first indication sent by the terminal includes:
receiving, by the network-side device, a second message sent by the terminal, where the second message includes the first indication; and
the second message includes at least one of the following:
   an RRC establishment request message, an RRC establishment completion message, an RRC resume request message, and an RRC resume completion message.

Optionally, after the sending, by a network-side device, control information to a terminal, the method further includes:
sending, by the network-side device, measurement result request information to the terminal; where
the measurement result request information is used to request for at least one of the following:
   a measurement result related to EPS fallback;
   a measurement result related to RAT fallback;
   a measurement result related to load control;
   a measurement result in an idle state; and
   a measurement result in an inactive state.

Optionally, the sending, by the network-side device, measurement result request information to the terminal includes:
sending, by the network-side device, a third message to the terminal, where the third message includes the measurement result request information; and
the third message includes at least one of the following:
   an RRC resume message, a terminal information request message, and an RRC reconfiguration message.

Optionally, after the sending, by the network-side device, measurement result request information to the terminal, the method further includes:
receiving, by the network-side device, a measurement report fed back by the terminal, where the measurement report includes the early measurement result.

Optionally, the receiving, by the network-side device, a measurement report fed back by the terminal includes:
receiving, by the network-side device, a fourth message fed back by the terminal, where the fourth message includes the measurement report; and
the fourth message includes at least one of the following:
   an RRC resume completion message, an RRC reconfiguration completion message, an uplink information transmission message, a terminal information response message, and uplink dedicated control channel information.

Optionally, the method further includes:
sending, by the network-side device, measurement configuration related information to the terminal, where the measurement configuration related information includes the first list; and
the first list is used to indicate a valid area range for configuration information, and the first list includes at least one frequency point and at least one cell corresponding to each frequency point.

Optionally, the sending, by the network-side device, measurement configuration related information to the terminal includes:
sending, by the network-side device, a fifth message to the terminal, where the fifth message includes the measurement configuration related information; and
the fifth message includes at least one of the following:
   a broadcast message and an RRC release message.

It should be noted that all the descriptions about the network-side device in the foregoing embodiment are applicable to the embodiment of the measurement configuration method applied to the network-side device, with the same technical effects achieved. As shown in FIG. 6, an embodiment of this application further provides a measurement configuration apparatus 600, applied to a network-side device and including:
a third transmission module 601, configured to send control information to a terminal.

The control information includes at least one of the following:
a first cell provides a first service through evolved packet system EPS fallback and/or radio access technology RAT fallback, where the first service includes a voice service;
the first cell requires early measurement information related to load control;
the first cell supports the terminal to perform early measurement in the first cell; and
the first cell supports the terminal to report availability of an early measurement result after entering a connected state in the first cell.

Optionally, the third transmission module 601 is configured to:
send a first message to a terminal, where the first message includes the control information; and
the first message includes at least one of the following:
   a broadcast message; and
   a radio resource control RRC release message.

Optionally, after the third transmission module 601 sends the control information to the terminal, the apparatus further includes:
a third receiving module, configured to receive a first indication sent by the terminal;
the first indication is used for indicating that the terminal has a measurement result.

Optionally, the measurement result includes at least one of the following:
a measurement result related to EPS fallback;
a measurement result related to RAT fallback;
a measurement result related to load control; and
an available early measurement result.

Optionally, the third receiving module is configured to:
receive a second message sent by the terminal, where the second message includes the first indication; and
the second message includes at least one of the following:
   an RRC establishment request message, an RRC establishment completion message, an RRC resume request message, and an RRC resume completion message.

Optionally, after the third transmission module 601 sends the control information to the terminal:
the third transmission module is configured to send measurement result request information to the terminal.

The measurement result request information is used to request for at least one of the following:
a measurement result related to EPS fallback;
a measurement result related to RAT fallback;
a measurement result related to load control;
a measurement result in an idle state; and
a measurement result in an inactive state.

Optionally, the third transmission module is configured to:
send a third message to the terminal, where the third message includes the measurement result request information; and
the third message includes at least one of the following:
   an RRC resume message, a terminal information request message, and an RRC reconfiguration message.

Optionally, after the third transmission module sends the measurement result request information to the terminal, the apparatus further includes:
a fourth receiving module, configured to receive a measurement report fed back by the terminal, where the measurement report includes the early measurement result.

Optionally, the fourth receiving module is configured to:
receiving, for the network-side device, a fourth message fed back by the terminal, where the fourth message includes the measurement report; and
the fourth message includes at least one of the following:
   an RRC resume completion message, an RRC reconfiguration completion message, an uplink information transmission message, a terminal information response message, and uplink dedicated control channel information.

Optionally, the apparatus further includes:
a fourth transmission module, configured to send measurement configuration related information to the terminal, where the measurement configuration related information includes the first list; and
the first list is used to indicate a valid area range for configuration information, and the first list includes at least one frequency point and at least one cell corresponding to each frequency point.

Optionally, the fourth transmission module is configured to:
send a fifth message to the terminal, where the fifth message includes the measurement configuration related information; and
the fifth message includes at least one of the following:
   a broadcast message and an RRC release message.

It should be noted that the apparatus embodiments correspond to the foregoing network-side device method embodiments, and the implementation processes and implementations of the foregoing method embodiments can be applied to the apparatus embodiments, with the same technical effects achieved.

Preferentially, an embodiment of this application further provides a network-side device, including a processor, a memory, and a program or instructions stored in the memory and capable of running on the processor. When the program or instructions are executed by the processor, the processes of the foregoing measurement configuration method on the network-side device side are implemented, with the same technical effects achieved. To avoid repetition, details are not described herein again.

An embodiment of this application further provides a readable storage medium. The readable storage medium may be non-volatile or volatile. A program or instructions are stored in the computer readable storage medium. When the program or the instructions are executed by a processor, the processes of the foregoing embodiments of the measurement configuration method applied to the network-side device can be implemented, with the same technical effects achieved. To avoid repetition, details are not described herein again.

The computer-readable storage medium is, for example, a read-only memory (Read-Only Memory, ROM), a random access memory (Random Access Memory, RAM), a magnetic disk, or an optical disc.

An embodiment of this application further provides a network-side device, including a processor and a communication interface, where the communication interface is configured to send control information to a terminal.

The control information includes at least one of the following:
a first cell provides a first service through evolved packet system EPS fallback and/or radio access technology RAT fallback, where the first service includes a voice service;
the first cell requires early measurement information related to load control;
the first cell supports the terminal to perform early measurement in the first cell; and
the first cell supports the terminal to report availability of an early measurement result after entering a connected state in the first cell.

The network-side device embodiments correspond to the foregoing network-side device method embodiments, and the implementation processes and implementations of the foregoing method embodiments can be applied to the network-side device embodiments, with the same technical effects achieved.

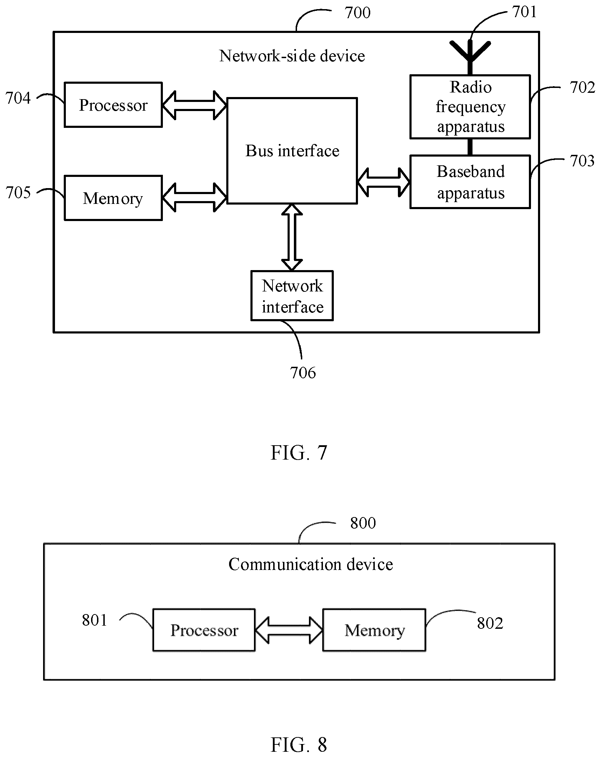

Specifically, an embodiment of this application further provides a network-side device. As shown in FIG. 7, the network-side device 700 includes an antenna 701, a radio frequency apparatus 702, and a baseband apparatus 703. The antenna 701 is connected to the radio frequency apparatus 702. In an uplink direction, the radio frequency apparatus 702 receives information by using the antenna 701, and sends the received information to the baseband apparatus 703 for processing. In a downlink direction, the baseband apparatus 703 processes to-be-sent information, and sends the information to the radio frequency apparatus 702; and the radio frequency apparatus 702 processes the received information and then sends the information out by using the antenna 701.

The frequency band processing apparatus may be located in the baseband apparatus 703. The method performed by the network-side device in the foregoing embodiments may be implemented in the baseband apparatus 703, and the baseband apparatus 703 includes a processor 704 and a memory 705.

The baseband apparatus 703 may include, for example, at least one baseband board, where a plurality of chips are disposed on the baseband board. As shown in FIG. 7, one of the chips is, for example, the processor 704, connected to the memory 705, to invoke a program in the memory 705 to perform the operation of the network-side device shown in the foregoing method embodiment.

The baseband apparatus 703 may further include a network interface 706, configured to exchange information with the radio frequency apparatus 702, where the interface is, for example, a common public radio interface (Common Public Radio Interface, CPRI).

Specifically, the network-side device in this embodiment of this disclosure further includes: instructions or a program stored in the memory 705 and capable of running on the processor 704. The processor 704 invokes the instructions or program in the memory 705 to execute the method executed by the modules shown in FIG. 6, with the same technical effects achieved. To avoid repetition, details are not repeated herein.

Optionally, as shown in FIG. 8, an embodiment of this application further provides a communication device 800, including a processor 801, a memory 802, and a program or instructions stored in the memory 802 and capable of running on the processor 801. For example, when the communication device 800 is a terminal and when the program or the instructions are executed by the processor 801, the processes of the foregoing embodiments of the measurement method are implemented, with the same technical effects achieved. When the communication device 800 is a network-side device and when the program or the instructions are executed by the processor 801, the processes of the foregoing embodiments of the measurement configuration method are implemented, with the same technical effects achieved. To avoid repetition, details are not described herein again.

The terminal included in the embodiments of this application may be a device that provides a user with voice and/or data connectivity, a handheld device with a wireless connection function, another processing device connected to a wireless modem, or the like. In different systems, the name of the terminal device may be different, for example, in a 5G system, the terminal device may be referred to as user equipment (User Equipment, UE). A wireless terminal device may communicate with one or more core networks (Core Network, CN) through a radio access network (Radio Access Network, RAN). The wireless terminal device may be a mobile terminal device, such as a mobile phone (or referred to as a "cellular" phone) or a computer with a mobile terminal device. For example, the wireless terminal device may be a portable, pocket-sized, handheld, computer built-in, or in-vehicle mobile apparatus, which exchanges voice and/or data with the radio access network. For example, the wireless terminal device may be a device such as a personal communications service (Personal Communication Service, PCS) phone, a cordless telephone set, a session initiation protocol (Session Initiated Protocol, SIP) phone, a wireless local loop (Wireless Local Loop, WLL) station, or a personal digital assistant (Personal Digital Assistant, PDA). The wireless terminal device may also be referred to a system, a subscriber unit (subscriber unit), a subscriber station (subscriber station), a mobile station (mobile station), a mobile (mobile), a remote station (remote station), an access point (access point), a remote terminal (remote terminal), an access terminal device (access terminal), a user terminal device (user terminal), a user agent (user agent), or a user device (user device), which is not limited in the embodiments of this application.

The network-side device in the embodiments of this application may be a base station (Base Transceiver Station, BTS) in global system for mobile communications (Global System of Mobile communication, GSM) or code division multiple access (Code Division Multiple Access, CDMA), or may be a base station (NodeB, NB) in wideband code division multiple access (Wideband Code Division Multiple Access, WCDMA), or may be an evolved base station (Evolved Node B, eNB or eNodeB) in LTE, or a relay station or access point, or a base station in the future 5G network, which is limited herein.

Multi input multi output (Multi Input Multi Output, MIMO) transmission may be performed between the network-side device and the terminal using one or more antennas each, and the MIMO transmission may be single-user MIMO (Single User MIMO, SU-MIMO) or multi-user MIMO (Multiple User MIMO, MU- MIMO). Based on shape and the number of root antenna combinations, the MIMO transmission may be two-dimensional MIMO (2Dimension MIMO, 2D-MIMO), three-dimensional MIMO (3Dimension MIMO, 3D-MIMO), full-dimension MIMO (Full-Dimension, FD-MIMO), or massive-MIMO (massive-MIMO, M-MIMO), or may be diversity transmission, precoded transmission, beamforming transmission, or the like.

An embodiment of this application further provides a chip, where the chip includes a processor and a communication interface. The communication interface is coupled to the processor, and the processor is configured to run a program or instructions to implement the processes of the foregoing embodiments of the measurement method or measurement configuration method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a readable storage medium. The readable storage medium may be non-volatile or volatile. A program or instructions are stored in the readable storage medium. When the program or the instructions are executed by a processor, the processes of the foregoing embodiments of the measurement method or measurement configuration method can be implemented, with the same technical effects achieved. To avoid repetition, details are not described herein again. It should be noted that the readable storage medium may be volatile or nonvolatile, and in addition, the readable storage medium may be non-transitory.

An embodiment of this application further provides a computer program/program product, where the computer program/program product is stored in a non-transitory storage medium, and when being executed by at least one processor, the computer program/program product is configured to implement the processes of the foregoing embodiments of the measurement method or measurement configuration method, with the same technical effects achieved. To avoid repetition, details are not repeated herein.

An embodiment of this application further provides a communication device, configured to perform the processes of the foregoing embodiments of the measurement method or measurement configuration method, with the same technical effects achieved. To avoid repetition, details are not described herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A measurement method, comprising:
receiving, by a terminal, control information sent by a network-side device; and
performing, by the terminal, early measurement according to the control information and measurement configuration information to obtain an early measurement result; wherein
the control information is used to indicate at least one of the following:
a first cell provides a first service through evolved packet system EPS fallback and/or radio access technology RAT fallback, wherein the first service comprises a voice service;
the first cell requires early measurement information related to load control;
the first cell supports the terminal to perform early measurement in the first cell; and
the first cell supports the terminal to report availability of an early measurement result after entering a connected state in the first cell.

2. The method according to claim 1, wherein the early measurement comprises at least one of the following:
measurement performed in an idle state, measurement performed in inactive state, measurement performed when entering a connected state from the idle state, measurement performed when entering the connected state from the inactive state, measurement performed when the network-side device requests for a measurement result, and measurement performed when receiving control information sent by the network-side device.

3. The method according to claim 1, wherein the receiving, by a terminal, control information sent by a network-side device comprises:
receiving, by the terminal, a first message sent by the network-side device, wherein the first message comprises the control information; and
the first message comprises at least one of the following:
a broadcast message; and
a radio resource control RRC release message.

4. The method according to claim 1, after the performing, by the terminal, early measurement according to the control information and measurement configuration information to obtain an early measurement result, further comprising:
sending, by the terminal, a first indication to the network-side device; wherein
the first indication is used for indicating that the terminal has a measurement result.

5. The method according to claim 4, wherein the measurement result comprises at least one of the following:
a measurement result related to EPS fallback;
a measurement result related to RAT fallback;
a measurement result related to load control; and
an available early measurement result.

6. The method according to claim 4, wherein the sending, by the terminal, a first indication to the network-side device comprises:
sending, by the terminal, a second message to the network-side device, wherein the second message comprises the first indication; and
the second message comprises at least one of the following:
an RRC establishment request message, an RRC establishment completion message, an RRC resume request message, and an RRC resume completion message.

7. The method according to claim 1, further comprising:
receiving, by the terminal, measurement result request information sent by the network-side device; wherein
the measurement result request information is used to request for at least one of the following:
a measurement result related to EPS fallback;
a measurement result related to RAT fallback;
a measurement result related to load control;
a measurement result in an idle state; and
a measurement result in an inactive state.

8. The method according to claim 7, wherein the receiving, by the terminal, measurement result request information sent by the network-side device comprises:
receiving, by the terminal, a third message sent by the network-side device, wherein the third message comprises the measurement result request information; and
the third message comprises at least one of the following:
an RRC resume message, a terminal information request message, and an RRC reconfiguration message.

9. The method according to claim 7, after the receiving, by the terminal, measurement result request information sent by the network-side device, further comprising:
sending, by the terminal, a measurement report to the network-side device based on the measurement result request information, wherein the measurement report comprises the early measurement result.

10. The method according to claim 9, wherein the sending a measurement report to the network-side device comprises:
sending, by the terminal, a fourth message to the network-side device, wherein the fourth message comprises the measurement report; and
the fourth message comprises at least one of the following:
an RRC resume completion message, an RRC reconfiguration completion message, an uplink information transmission message, a terminal information response message, and uplink dedicated control channel information.

11. The method according to claim 1 or 9, after the performing, by the terminal, early measurement according to the control information and measurement configuration information to obtain an early measurement result, further comprising:
storing, by the terminal, an early measurement result for a second cell; wherein
the early measurement result corresponding to the second cell is greater than or equal to a first threshold.

12. The method according to claim 11, wherein the first threshold comprises at least one of the following:
a reporting threshold for a measurement result of a frequency point corresponding to EPS fallback;
a reporting threshold for a measurement result of a frequency point corresponding to RAT fallback;
a reporting threshold for a measurement result of a frequency point corresponding to load control; and
a reporting threshold corresponding to the early measurement result.

13. The method according to claim 1, wherein the terminal has a first capability; and
the first capability comprises at least one of the following:
supporting EPS fallback, supporting to obtain a voice service through an evolved universal mobile telecommunications system terrestrial radio access network E-UTRAN, supporting to obtain a voice service through a 5G core network, supporting load control, and supporting to report an early measurement result.

14. The method according to claim 1, wherein the measurement configuration information comprises at least one of the following:
part of configuration information in system information block 4;
all configuration information in system information block 4;
part of configuration information in system information block 3;
all configuration information in system information block 3;
part of configuration information in system information block 5;
all configuration information in system information block 5;
part of configuration information in system information block 11;
all configuration information in system information block 11; and
configuration information in an RRC release message.

15. The method according to claim 14, wherein the part of configuration information comprises: configuration information corresponding to a frequency point comprised in a first list; and
the first list is used to indicate a valid area range for configuration information, and the first list comprises at least one frequency point and at least one cell corresponding to each frequency point.

16. The method according to claim 15, further comprising:
receiving, by the terminal, measurement configuration related information sent by the network-side device, wherein the measurement configuration related information comprises the first list.

17. The method according to claim 16, wherein the receiving, by the terminal, measurement configuration related information sent by the network-side device comprises:
receiving, by the terminal, a fifth message sent by the network-side device, wherein the fifth message comprises the measurement configuration related information; and
the fifth message comprises at least one of the following:
a broadcast message and an RRC release message.

18. The method according to claim 1, wherein the measurement configuration information comprises frequency point information, and the frequency point information comprises a frequency point identifier and a maximum measurement bandwidth corresponding to each frequency point identifier.

19. A measurement configuration method, comprising:
sending, by a network-side device, control information to a terminal; wherein
the control information comprises at least one of the following:
a first cell provides a first service through evolved packet system EPS fallback and/or radio access technology RAT fallback, wherein the first service comprises a voice service;
the first cell requires early measurement information related to load control;
the first cell supports the terminal to perform early measurement in the first cell; and
the first cell supports the terminal to report availability of an early measurement result after entering a connected state in the first cell.

20. The method according to claim 19, wherein the sending, by a network-side device, control information to a terminal comprises:
sending, by the network-side device, a first message to a terminal, wherein the first message comprises the control information; and
the first message comprises at least one of the following:
a broadcast message; and
a radio resource control RRC release message.

21. The method according to claim 19, after the sending, by a network-side device, control information to a terminal, further comprising:
receiving, by the network-side device, a first indication sent by the terminal; wherein
the first indication is used for indicating that the terminal has a measurement result.

22. The method according to claim 21, wherein the measurement result comprises at least one of the following:
a measurement result related to EPS fallback;
a measurement result related to RAT fallback;
a measurement result related to load control; and
an available early measurement result.

23. The method according to claim 21, wherein the receiving, by the network-side device, a first indication sent by the terminal comprises:
receiving, by the network-side device, a second message sent by the terminal, wherein the second message comprises the first indication; and
the second message comprises at least one of the following:
an RRC establishment request message, an RRC establishment completion message, an RRC resume request message, and an RRC resume completion message.

24. The method according to claim 19, after the sending, by a network-side device, control information to a terminal, further comprising:
sending, by the network-side device, measurement result request information to the terminal; wherein
the measurement result request information is used to request for at least one of the following:
a measurement result related to EPS fallback;
a measurement result related to RAT fallback;
a measurement result related to load control;
a measurement result in an idle state; and
a measurement result in an inactive state.

25. The method according to claim 24, wherein the sending, by the network-side device, measurement result request information to the terminal comprises:
sending, by the network-side device, a third message to the terminal, wherein the third message comprises the measurement result request information; and
the third message comprises at least one of the following:
an RRC resume message, a terminal information request message, and an RRC reconfiguration message.

26. The method according to claim 24, after the sending, by the network-side device, measurement result request information to the terminal, further comprising:
receiving, by the network-side device, a measurement report fed back by the terminal, wherein the measurement report comprises the early measurement result.

27. The method according to claim 26, wherein the receiving, by the network-side device, a measurement report fed back by the terminal comprises:
receiving, by the network-side device, a fourth message fed back by the terminal, wherein the fourth message comprises the measurement report; and
the fourth message comprises at least one of the following:
an RRC resume completion message, an RRC reconfiguration completion message, an uplink information transmission message, a terminal information response message, and uplink dedicated control channel information.

28. The method according to claim 19, further comprising:
sending, by the network-side device, measurement configuration related information to the terminal, wherein the measurement configuration related information comprises the first list; and
the first list is used to indicate a valid area range for configuration information, and the first list comprises at least one frequency point and at least one cell corresponding to each frequency point.

29. The method according to claim 28, wherein the sending, by the network-side device, measurement configuration related information to the terminal comprises:
sending, by the network-side device, a fifth message to the terminal, wherein the fifth message comprises the measurement configuration related information; and
the fifth message comprises at least one of the following:
a broadcast message and an RRC release message.

30. A measurement apparatus, comprising:
a first receiving module, configured to receive control information sent by a network-side device; and
a measurement module, configured to perform early measurement according to the control information and measurement configuration information to obtain an early measurement result; wherein
the control information is used to indicate at least one of the following:
a first cell provides a first service through evolved packet system EPS fallback and/or radio access technology RAT fallback, wherein the first service comprises a voice service;
the first cell requires early measurement information related to load control;
the first cell supports the terminal to perform early measurement in the first cell; and
the first cell supports the terminal to report availability of an early measurement result after entering a connected state in the first cell.

31. The method according to claim 30, after the measurement module performs early measurement according to the control information and measurement configuration information to obtain an early measurement result, further comprising:
a first transmission module, configured to send a first indication to the network-side device, wherein
the first indication is used for indicating that the terminal has a measurement result.

32. The method according to claim 30, further comprising:
a second receiving module, configured to receive measurement result request information sent by the network-side device; wherein
the measurement result request information is used to request for at least one of the following:
a measurement result related to EPS fallback;
a measurement result related to RAT fallback;
a measurement result related to load control;
a measurement result in an idle state; and
a measurement result in an inactive state.

33. The method according to claim 32, after the second receiving module receives the measurement result request information sent by the network-side device, further comprising:
a second transmission module, configured to send a measurement report to the network-side device based on the measurement result request information, wherein the measurement report comprises the early measurement result.

34. A measurement configuration apparatus, comprising:
a third transmission module, configured to send control information to a terminal; wherein
the control information comprises at least one of the following:
a first cell provides a first service through evolved packet system EPS fallback and/or radio access technology RAT fallback, wherein the first service comprises a voice service;
the first cell requires early measurement information related to load control;
the first cell supports the terminal to perform early measurement in the first cell; and
the first cell supports the terminal to report availability of an early measurement result after entering a connected state in the first cell.

35. A terminal, comprising a processor, a memory, and a program or instructions stored in the memory and capable of running on the processor, wherein when the program or the instructions are executed by the processor, the steps of the measurement method according to any one of claims 1 to 18 are implemented.

36. A network-side device, comprising a processor, a memory, and a program or instructions stored in the memory and capable of running on the processor, wherein when the program or the instructions are executed by the processor, the steps of the measurement configuration method according to any one of claims 19 to 29 are implemented.

37. A readable storage medium, wherein the readable storage medium stores a program or instructions, and when the program or instructions are executed by a processor, the steps of the measurement method according to any one of claims 1 to 18 are implemented, or the steps of the measurement configuration method according to any one of claims 19 to 29 are implemented.

38. A chip, comprising a processor and a communication interface, wherein the communication interface is coupled to the processor, and the processor is configured to execute a program or instructions to implement the steps of the measurement method according to any one of claims 1 to 18 or the steps of the measurement configuration method according to any one of claims 19 to 29.

39. A computer program product, wherein the computer program product is stored in a non-transitory readable storage medium, and the computer program product is executed by at least one processor to implement the steps of the measurement method according to any one of claims 1 to 18 or the steps of the measurement configuration method according to any one of claims 19 to 29.

40. A communication device, configured to perform the steps of the measurement method according to any one of claims 1 to 18 or the steps of the measurement configuration method according to any one of claims 19 to 29.
